# EUROPÄISCHE PATENTSCHRIFT

(11) **EP 4 054 898 B1**
(45) Veröffentlichungstag und Bekanntmachung des Hinweises auf die Patenterteilung: **24.06.2026**
(21) Anmeldenummer: 20760395.2
(22) Anmeldetag: 13.08.2020
(51) Int. Cl.: B60R 16/02, B21D 11/08, B21D 7/06

(54) **KRAFTFAHRZEUGENERGIELEITUNG SOWIE EIN VERFAHREN ZUM BIEGEN EINER KRAFTFAHRZEUGENERGIELEITUNG**
MOTOR VEHICLE POWER LINE AND METHOD FOR BENDING A MOTOR VEHICLE POWER LINE
LIGNE ÉLECTRIQUE DE VÉHICULE À MOTEUR ET PROCÉDÉ DE CINTRAGE D'UNE LIGNE ÉLECTRIQUE DE VÉHICULE À MOTEUR

(30) Priorität: 07.11.2019 DE 102019130078
(43) Veröffentlichungstag der Anmeldung: 14.09.2022
(73) Patentinhaber: One Mobility Autokabel GmbH, 72793 Pfullingen (DE)
(72) Erfinder: MEYER, Bernd, 79739 Schwörstadt (DE)
(74) Vertreter: Cohausz & Florack
(86) Internationale Anmeldenummer: PCT/EP2020/072727
(87) Internationale Veröffentlichungsnummer: WO 2021/089209

(56) Entgegenhaltungen:
- EP-A1- 3 531 429
- EP-A2- 0 133 256
- DE-A1- 1 765 770
- DE-A1- 102006 050 705
- DE-A1- 102014 011 180
- DE-A1- 4 210 202
- DE-B1- 2 622 082
- US-A- 3 636 690

## Beschreibung

Der Gegenstand betrifft eine Kraftfahrzeugenergieleitung sowie ein Verfahren zum Biegen einer Kraftfahrzeugenergieleitung als auch eine Vorrichtung zum Biegen einer Kraftfahrzeugenergieleitung.

Der Einsatz von Flachleitungen, welche ein mehreckiges Profil aufweisen und aus einem Flachleiter aus einem metallischen Vollmaterial isoliert mit einem Isolationswerkstoff gebildet sind, erfreut sich immer größerer Beliebtheit in automotiven Anwendungen. Insbesondere für die Energieverteilung innerhalb eines Kraftfahrzeugs, sei es von der Batterie zum Antriebsstrang oder zum Starter, sei es zwischen dem Generator und der Batterie oder zwischen dem Starter und dem Generator, als auch zur Energieverteilung innerhalb des Kraftfahrzeugs, kommen vermehrt Flachleitungen zum Einsatz. Die Verlegung der Flachleitungen in der Karosserie verlangt häufig, dass diese in zumindest zwei Raumrichtungen gebogen ist.

Eine Flachleitung erstreckt sich in ihrer Längsrichtung entlang einer Längsachse und hat zumindest eine breite Oberfläche und zumindest eine schmale Oberfläche, bevorzugt zwei einander (bevorzugt parallel) gegenüber liegende breite Oberflächen und zwei einander (bevorzugt parallel) gegenüber liegende schmale Oberflächen. Eine Flächennormale auf der breiten Oberfläche kann als Hochachse verstanden werden und eine Flächennormale auf der schmalen Oberfläche kann als Querachse verstanden werden. Diese beiden Achsen können senkrecht zueinander als auch senkrecht zur Längsachse liegen.

Für die Verlegung der Flachleitung innerhalb des Kraftfahrzeugs wird diese zumindest um die Hochachse und/oder die Querachse gebogen. Ein Tordieren um die Längsachse ist ebenfalls möglich, kommt jedoch seltener vor.

Flachleitungen für die Energieverteilung haben Leitungsquerschnitte jenseits von 50mm². Leitungsquerschnitte von 100mm² und mehr sind durchaus üblich. Zur Verlegung in den hierfür vorgesehenen Bauräumen des Kraftfahrzeugs werden Flachleitungen üblicherweise vorkonfektioniert. Dazu werden die Flachleitungen bereits bei deren Herstellung gebogen. Durch dieses 3D-Umformen werden besonders hohe Anforderungen an die Isolation gestellt.

Bei der Planung der Biegegeometrien muss stets die mechanische Belastung des Isolationswerkstoffs berücksichtigt werden. Insbesondere sind kleine Biegeradien für das Isolationsmaterial problematisch. Auch Abzweigungen entlang des Energieleiters müssen durch entsprechende Aussparungen in der Isolation berücksichtigt werden. Darüber hinaus kann es zu unterschiedlichen Temperaturanforderungen an das Isolationsmaterial entlang der Längsachse des Flachleiters kommen.

Gerade bei engen Biegungen mit kleinen Biegeradien um die Hochachse kommt es zu erheblichen Materialbelastungen des Isolationswerkstoffs, da der Unterschied zwischen dem inneren und dem äußeren Beigeradius erheblich ist, und insbesondere innere Biegeradien sehr viel kleiner sind als äußere Biegeradien. Dies kann zum Aufreißen des Isolationswerkstoffs oder zum Kaltverfestigen des Werkstoffs führen, was beides unerwünscht ist.

Bisher wird dieses Problem umgangen, in dem Biegungen, insbesondere um die Hochachse, mit Biegeradien gewählt werden, welche für den Isolationswerkstoff noch geeignet sind. Diese dann jedoch großen Biegeradien beschränken die Flexibilität des Flachleiters in der automotiven Anwendung, da durch die Beschränkung des Biegeradius das Routing innerhalb des Fahrzeugs von einer Quelle zu einem Verbraucher verkompliziert wird und gegebenenfalls Umwege der Flachleitung in Kauf genommen werden, die einerseits mehr Bauraum benötigen und andererseits die Leitungsverluste aufgrund der höheren Leitungslänge erhöhen.

Darüber hinaus ist der Materialeinsatz für längere Leitungen größer, was zu Produktionsmehrkosten führt.

Die DE2622082 offenbart eine Leitung mit einem Flachleiter mit einem zumindest viereckigen Profil, wobei sich der Flachleiter entlang einer Längsachse erstreckt, wobei sich eine Hochachse entlang einer Flächennormalen einer breiten Oberfläche des Flachleiters erstreckt und sich eine Querachse entlang einer Flächennormalen einer schmalen Oberfläche des Flachleiters erstreckt und der Flachleiter um die Hochachse gebogen ist und einen inneren Biegeradius und einen äußeren Biegeradius aufweist. Der Flachleiter weist im Bereich des inneren Biegeradius an seiner am inneren Biegeradius angeordneten inneren Seitenkante zumindest eine Umformung um die Längsachse auf. Die Umformung des Flachleiters erfolgt über die gesamte Breite.

Dem Gegenstand lag die Aufgabe zugrunde, eine Kraftfahrzeugenergieleitung zur Verfügung zu stellen, welche erheblich geringere Biegeradien ermöglicht, als dies bisher der Fall ist.

Diese Aufgabe wird durch eine Kraftfahrzeugenergieleitung nach Anspruch 1 sowie ein Verfahren nach Anspruch 8 gelöst.

Eine Kraftfahrzeugenergieleitung ist zumindest aus einem Flachleiter mit einem zumindest viereckigen Profil gebildet. Der Flachleiter ist dabei bevorzugt aus einem leitenden Material, insbesondere einem metallischen Werkstoff gebildet.

Insbesondere kann der Flachleiter aus Aluminiumwerkstoff oder Kupferwerkstoff, insbesondere aus einer Aluminiumlegierung oder einer Kupferlegierung gebildet sein. Die Kraftfahrzeugenergieleitung kann darüber hinaus an einem oder beiden Enden mit Anschlüssen für den Anschluss an elektrische Komponenten, wie z.B. Kabelschuhe, Anschlusskonsolen, Anschlussbolzen oder dergleichen ausgestattet sein. Ferner kann die Kraftfahrzeugenergieleitung mit einem Isolationswerkstoff zumindest abschnittsweise isoliert sein.

Der Flachleiter erstreckt sich entlang einer Längsachse. Der Flachleiter hat zumindest eine breite Oberfläche, bevorzugt zwei einander gegenüberliegende, bevorzugt parallel zueinander verlaufende breite Oberflächen und zumindest eine schmale Oberfläche, bevorzugt zwei einander gegenüberliegende, bevorzugt parallel zueinander verlaufende schmale Oberflächen. Eine Flächennormale einer breiten Oberfläche kann eine Hochachse definieren und eine Flächennormale einer schmalen Oberfläche kann eine Querachse definieren.

Zur Realisierung von Leitungsverläufen innerhalb einer Karosse eines Kraftfahrzeugs sind insbesondere Biegungen um die Hochachse notwendig. Bei diesen Biegungen wird der Flachleiter so gebogen, dass an der breiten Oberfläche ein innerer als auch ein äußerer Biegeradius gebildet ist, wobei der innere Biegeradius im Wesentlichen um das Maß kleiner ist, als die Erstreckung des Flachleiters entlang der Querachse. Da die Querachse parallel zur breiten Oberfläche verläuft, ist der innere Biegeradius in der Regel erheblich kleiner als der äußere Biegeradius, insbesondere unterscheiden sich die Radien um einen Betrag von mehreren Zentimetern. Der innere Biegeradius verläuft an ein einer inneren Seitenkante des Flachleiters, der äußere Biegeradius verläuft an einer äußeren Seitenkante des Flachleiters.

Um zu verhindern, dass das Isolationsmaterial im Bereich des inneren Biegeradius zu stark gestaucht wird und dadurch beschädigt wird, wird vorgeschlagen, dass der Flachleiter im Bereich des inneren Biegeradius an seiner am inneren Biegeradius angeordneten inneren Seitenkante zumindest eine Umformung um die Längsachse aufweist. Durch die Umformung um die Längsachse im Bereich der inneren Seitenkante kann die freie Wegstrecke entlang des inneren Biegeradius erhöht werden. Dadurch ist es möglich, engere Biegeradien stressfrei und materialschonend zu realisieren. Das Material des Flachleiters und gegebenenfalls der Isolationswerkstoff werden während der Umformung gezielt in eine dritte Ebene, also um die Längsachse herum, umgelenkt. Die Biegekräfte, die durch das Biegen um die Hochachse auftreten, werden herabgesetzt und die Flächenpressung, die sich durch die Biegung um die Hochachse ergibt, wird durch die Biegung um die Längsachse reduziert.

Dadurch, dass der Werkstoff der Isolation im Bereich des inneren Biegeradius durch die Umformung weniger gestaucht wird, kommt es auch zu geringeren Materialverhärtungen. Der Werkstoff der Isolation ist dadurch bei auftretenden Temperaturunterschieden elastischer. Ferner können erheblich geringere Biegeradien zum Einsatz kommen.

Gemäß einem Ausführungsbeispiel wird vorgeschlagen, dass das Maß der Umformung von der inneren Seitenkante bis zu einer an dem äußeren Biegeradius angeordneten äußeren Seitenkante abnimmt. Das heißt, dass die Auslenkung der Umformung um die Längsachse im Bereich der inneren Seitenkante bevorzugt maximal ist und in Richtung der äußeren Seitenkante abnimmt. Insbesondere ist die Umformung lediglich von der inneren Seitenkante bis in etwa in den Bereich der Mittenachse des Flachleiters vorhanden. Ausgehend von der Mittenachse hin zur äußeren Seitenkante ist der Flachleiter bevorzugt nicht mehr umgeformt. Da der Biegeradius ausgehend von der inneren Seitenkante hin zu der äußeren Seitenkante zunimmt, kann die Umformung ausgehend von der inneren Seitenkante hin zur äußeren Seitenkante abnehmen.

Die Umformung erstreckt sich ausgehend von der inneren Seitenkante hin zu der Mittenachse des Flachleiters. Es wird vorgeschlagen, dass sich die Umformung entlang einer Achse senkrecht zur inneren Seitenkante erstreckt. Diese Achse ist bevorzugt auch senkrecht zur Hochachse und besonders bevorzugt parallel zur Querachse des Flachleiters.

Wie bereits erläutert, nimmt der Biegeradius von der inneren Seitenkante hin zur äußeren Seitenkante zu. An der äußeren Seitenkante tritt somit keine Stauchung des Isolationswerkstoffs auf. Die Umformung kann gemäß einem Ausführungsbeispiel vor der äußeren Seitenkante enden.

Gemäß einem Ausführungsbeispiel wird vorgeschlagen, dass die Umformung aus zumindest zwei zueinander gegenläufigen Biegungen um die Längsachse gebildet ist. In diesem Fall wird die innere Seitenkante zunächst in eine erste Richtung um die Längsachse gebogen und in einem Abstand dazu in eine entgegengesetzte Richtung um die Längsachse gebogen.

Gemäß einem Ausführungsbeispiel wird vorgeschlagen, dass die Umformung aus zueinander intermittierend gegenläufigen Biegungen um die Längsachse gebildet ist. Betrachtend man den Flachleiter von der Seite, so verläuft die innere Seitenkante bevorzugt abwechselnd nach oben und nach unten.

Gemäß einem Ausführungsbeispiel wird vorgeschlagen, dass die Umformung in einem Längsschnitt im Bereich der inneren Seitenkante wellenförmig ist. Die Wellen können dabei halbrund oder V-förmig oder auch in einer sonstigen Art und Weise wellig gebildet sein.

Der Flachleiter ist, wie eingangs bereits erläutert, aus einem metallischen Material. Darüber hinaus ist bevorzugt, dass der Flachleiter mit einem Isolationswerkstoff isoliert ist und dass der Flachleiter zusammen mit dem Isolationswerkstoff umgeformt ist. Die Umformung wird somit nicht nur in das Material des Flachleiters, sondern auf das Material des Isolationswerkstoffs eingebracht.

Ein weiterer Aspekt ist ein Verfahren zum Biegen einer Kraftfahrzeugenergieleitung, insbesondere einer oben beschriebenen Kraftfahrzeugenergieleitung. Bei diesem Verfahren wird zunächst ein Flachleiter mit einem viereckigen Profil bereitgestellt.

Der Flachleiter erstreckt sich entlang einer Längsachse, wobei sich eine Hochachse entlang einer Flächennormalen einer breiten Oberfläche erstreckt und sich eine Querachse entlang einer Flächennormalen einer schmalen Oberfläche erstreckt.

Bei dem Verfahren wird der Flachleiter um die Hochachse gebogen, so dass der Flachleiter einen inneren Biegeradius und einen äußeren Biegeradius aufweist.

Um zu verhindern, dass der Isolationswerkstoff im Bereich des inneren Biegeradius zu stark gestaucht wird und es zu Materialverhärtungen kommt, wird vorgeschlagen, dass der Flachleiter im Bereich des inneren Biegeradius an seiner am inneren Biegeradius angeordneten inneren Seitenkante um die Längsachse umgeformt wird. Dieses Umformen kann vor dem Biegen oder während des Biegens um die Hochachse erfolgen. Der Isolationswerkstoff kann unmittelbar mit gebogen werden.

Es wird insbesondere bevorzugt, dass der Flachleiter zunächst umgeformt wird und anschließend um die Hochachse gebogen wird. Die Umformung entlang der inneren Seitenkante um die Längsachse kann zunächst ein Vorformen bedeuten. Dadurch wird eine Soll-Biegelinie definiert, entlang der Flachleiter beim Biegen um die Hochachse weiter umgeformt wird. Somit wird eine Biegerichtung der Umformung vorgegeben. Wird der Flachleiter anschließend um die Hochachse gebogen, so verformt sich der Flachleiter an der inneren Seitenkante weiter entlang der zunächst vorgegebenen Umformung. Da die Umformung bereits eingebracht ist, definiert diese den Verlauf der inneren Seitenkante während des Biegens um die Hochachse. Der Flachleiter und der Isolationswerkstoff werden daher definiert um die Längsachse umgeformt, während der Flachleiter und der Isolationswerkstoff um die Hochachse gebogen werden.

Auch ist es möglich, dass allein durch das Einbringen der Umformung der Biegeradius gebildet wird. Wird der Flachleiter im Bereich der inneren Seitenkante um die Längsachse umgeformt, so verbiegt sich der Flachleiter dabei naturgemäß gleichzeitig um seine Hochachse. Dies kann genutzt werden, um in einem Arbeitsschritt die Umformung und die Biegung zu erreichen.

Hierzu wird insbesondere vorgeschlagen, dass der Flachleiter mit seinen einander gegenüberliegenden breiten Oberflächen zwischen zwei Backen eines Biegewerkzeugs eingespannt wird und dass ein Spalt zwischen den Backen verkleinert wird und der Flachleiter durch die Backen umgeformt wird, wobei die Backen ineinander greifende Vor- und Rücksprünge aufweisen. Die Vor- und Rücksprünge sind insbesondere in dem Bereich vorgesehen, in dem die innere Seitenkante zwischen den Backen angelegt wird. Greifen die Vor- und Rücksprünge ineinander, biegen diese den Flachleiter um die Längsachse, insbesondere intermittierend, bevorzugt wellenförmig. Dabei können die Backen beispielsweise aufeinander zu geschwenkt werden, so dass entlang der Längsachse des Flachleiters dieser aufeinander folgend, insbesondere kontinuierlich zwischen in Längsachse nacheinander liegenden Vor- und Rücksprüngen eingepresst wird. Dadurch wird der Flachleiter entlang seiner Längsrichtung fortschreitend einerseits an der inneren Seitenkante umgeformt und dadurch, da das Material durch diese Umformung aus der Längsachse herausgedrückt wird, auch um die Hochachse gebogen.

Das Verbiegen erfolgt insbesondere derart, dass der Flachleiter an seiner inneren Seitenkante um die Längsachse umgeformt wird und an seiner äußeren Seitenkante entlang der Längsachse nicht umgeformt wird.

Durch das Umformen an der inneren Seitenkante kann gleichzeitig ein Verbiegen um die die Hochachse erfolgen, was gemäß einem Ausführungsbeispiel vorgeschlagen wird.

Wie bereits erläutert, kann der Flachleiter durch ein entsprechendes Biegewerkzeug verbogen werden. Ein solches Biegewerkzeug kann aus zwei Backen gebildet sein, die einander gegenüber liegen und gegenüberliegende Seitenkanten aufweisen. An diesen Seitenkanten können die Backen zahnförmig ineinandergreifende Vor- und Rücksprünge aufweisen. Die Backen und/oder die Vor- und Rücksprünge sind aufeinander zu beweglich, so dass die Vor- in die Rücksprünge bewegt werden, um den Flachleiter umzuformen.

Auf der anderen Seite sind die Backen an zwei einander gegenüberliegenden Seitenkanten glatt. An den zahnförmigen Seitenkanten liegt die innere Seitenkante des Flachleiters an und an den glatten Seitenkanten liegt die äußere Seitenkante des Flachleiters an.

Ein Biegewerkzeug kann auch bewegliche Stifte aufweisen, die parallel zu einer Querachse verlaufen und in Richtung der Hochachse beweglich sind. Die Stifte können die Vor- und /oder Rücksprünge bilden. Auf zwei einander gegenüberliegenden Backen sind jeweils solche Stifte intermittierend zueinander angeordnet. Die Backen können eine bogenförmige Seitenkante aufweisen. Der Bogen kann dem angestrebten Biegeradius des Flachleiters angepasst sein. An der gebogenen Seitenkante kann ein Spalt zwischen den Backen angeordnet ist und der Flachleiter kann in den Spalt eingelegt werden. An den Backen sind in Winkelabständen zueinander die Stifte angeordnet. Entlang des Bogens können zwei, drei, fünf oder sieben Stifte pro Seite. Die Stifte sind jeweils intermittierend zueinander an jeweils einer der Backen angeordnet.

Die Stifte werden zum Umformen auf den Flachleiter gedrückt. Dabei können die Stifte entlang des Bogens pendelnd auf und zu gefahren bzw. geschwenkt werden. In einer Art Wellenbewegung werden die Stifte nacheinander auf den Flachleiter gedrückt, insbesondere wobei nacheinander jeweils zumindest ein Stift einer jeweiligen Backe an den Flachleiter gedrückt wird. Die Stifte können dabei so gelagert sein, dass sie von der Seitenkante wegweisend auf den Flachleiter gerückt werden oder zu der Seitenkante hinweisend auf den Flachleiter gerückt werden.

Auf der der Nut gegenüberliegenden Seite ist der Flachleiter an einer Schiene gelagert. Die Schiene drückt den Flachleiter in die Nut und verhindert, dass der Flachleiter durch die beweglichen Stifte aus der Nut gedrückt wird. Die Schiene ist bevorzugt flexibel und wird mit der Biegung des Flachleiters um die Hochachse nachgeführt. Der Flachleiter ist insbesondere über ein Schutzprofil aus einem Kunststoff an der Schiene gelagert, um Beschädigungen zu vermeiden.

Die Stifte werden bevorzugt auf den Flachleiter geschwenkt, wobei die Stifte um jeweils eine Achse gelagert sind, die in einer aus der Querachse und der Längsachse gebildeten Ebene liegt. Die Stifte werden beim Verschwenken daher zunächst auf eine Seitenkante des Flachleiters gedrückt.

Die Stifte sind bevorzugt mit einem Kunststoff ummantelt um Beschädigungen am Flachleiter zu verhindern.

Das Verformen des Flachleiters kann, wie bereits erläutert, einerseits durch ein Umformen vor dem Biegen erfolgen. Durch dieses Umformen wird vorgegeben, in welche Richtung sich die innere Seitenkante beim Verbiegen um die Hochachse bewegt. Auch ist es möglich, dass durch das Umformen selbst der Flachleiter gleichzeitig auch um die Hochkante gebogen wird. Dieses gleichzeitige Umformen und Biegen kann insbesondere mit einer beschriebenen Vorrichtung erfolgen.

Die Backen können mit einer Sterngeometrie ausgestattet sein. Die beiden Backen können stufenlos zusammenfahren und dabei während des Umformens den Flachleiter auch verbiegen.

Anders als üblich wird der Flachleiter nicht um einen Dorn gebogen, sondern während des Umformens gleichzeitig gebogen. Durch das Umformen wird die innere Seitenkante um die Längsachse gebogen und die hierdurch auftretenden Kräfte führen zu einem Verbiegen um die Hochachse. Dies ist insbesondere dann der Fall, wenn das Umformen nur im Bereich der inneren Seitenkante erfolgt und sich nicht über die gesamte Breite des Flachleiters erstreckt.

Gemäß einem Ausführungsbeispiel wird vorgeschlagen, dass in Längsrichtung aufeinander folgende Umformungen um die Längsachse voneinander verschiedene Maße haben. Eine erste Umformung kann beispielsweise eine Auslenkung der inneren Seitenkante um ein erstes Maß, beispielsweise maximal 0,5cm Versatz zur Längsachse aufweisen und eine darauf folgende Umformung ein dazu größeres Maß, beispielsweise 1,5cm Versatz zur Längsachse aufweisen. Auch ist es möglich, dass das Maß der Umformung in Längsachse zunächst ansteigt und dann wieder geringer wird.

Nachfolgend wird der Gegenstand anhand einer Ausführungsbeispiele zeigenden Zeichnung näher erläutert. In der Zeichnung zeigen:
- Fig. 1a, b: eine Kraftfahrzeugenergieleitung;
- Fig. 2: eine um die Hochachse gebogene Kraftfahrzeugenergieleitung;
- Fig. 3a, b: Umformungen an der inneren Seitenkante der Flachleitung;
- Fig. 4: eine umgeformt und gebogene Flachleitung;
- Fig. 5: Klemmbacken eines Umformwerkzeugs;
- Fig. 6: Klemmbacken eines Umformwerkzeugs;
- Fig. 7: Klemmbacken eines Umformwerkzeugs;
- Fig. 8a-c: Umformen und gleichzeitiges Biegen durch ein Umformwerkzeug;
- Fig. 9a-c: Klemmbacken eines Umformwerkzeugs;
- Fig. 10a-d: Umformen und gleichzeitiges Biegen durch ein Umformwerkzeug;
- Fig. 11a-c: Eine Flachleitung beim Umformen und Biegen nach Fig. 8a-c bzw. 10a-d;

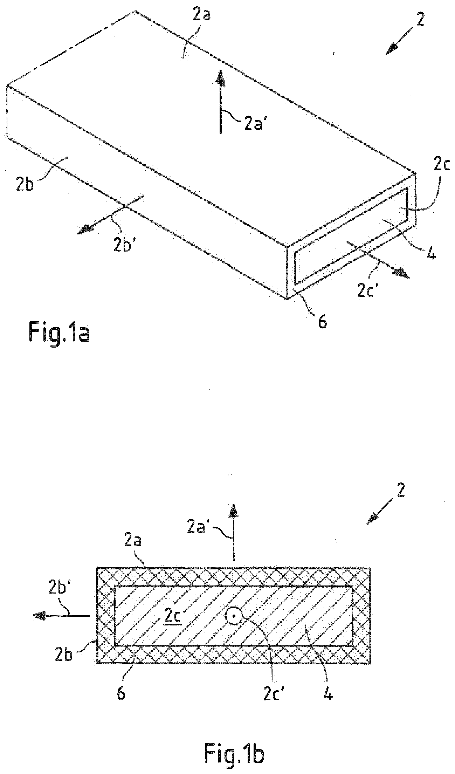

Fig. 1a zeigt einen Kraftfahrzeugenergieleitung 2 mit einem rechteckigen Profil. Die Kraftfahrzeugenergieleitung 2 ist gebildet aus einem Flachleiter 4, ummantelt von einem Isolationswerkstoff 6. Die Kraftfahrzeugenergieleitung 2 hat zwei einander gegenüberliegenden breiten Seiten 2a und zwei einander gegenüberliegenden schmalen Seiten 2b. Ferner hat die Kraftfahrzeugenergieleitung 2 zumindest eine Stirnseite 2c. Die Kraftfahrzeugenergieleitung 2 hat eine Hochachse 2a', welche eine Flächennormale auf der breiten Seite 2a ist. Die Kraftfahrzeugenergieleitung 2 hat eine Querachse 2b', welche eine Flächennormale auf der schmalen Seite 2b ist. Schließlich erstreckt sich die Kraftfahrzeugenergieleitung 2 in Längsrichtung in einer Längsachse 2c'.

Fig. 1b zeigt einen Querschnitt der Kraftfahrzeugenergieleitung 2 mit dem Flachleiter 4 als Kabelseele und dem Isolationswerkstoff 6. Die senkrecht zueinander stehenden Achsen, Hochachse 2a', Querachse 2b' und Längsachse 2c' sind ebenfalls eingezeichnet. Die Achsen und Ebenen gelten ebenso für den Flachleiter 4.

Die Kraftfahrzeugenergieleitung 2 (und somit auch der Flachleiter 4 zusammen oder ohne Isolationswerkstoff 6) wird zur Anpassung an einen Bauraum in einem Kraftfahrzeug in der Regel gebogen. Alle Ausführungen gelten für eine Kraftfahrzeugenergieleitung 2 oder den Flachleiter 4 alleine.

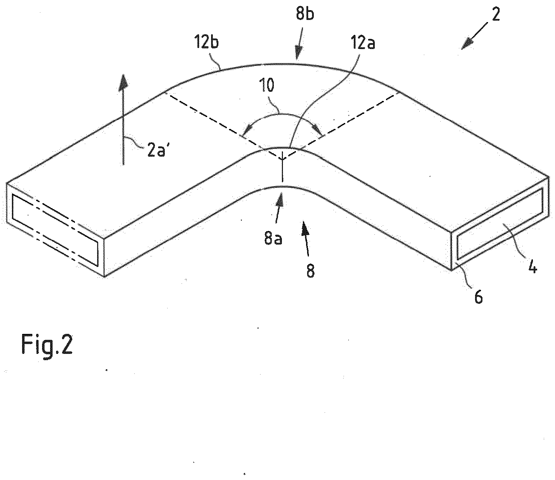

Es können Biegungen um die Hochachse 2a' erfolgen, wie in der Fig. 2 dargestellt ist. Die Kraftfahrzeugenergieleitung 2 ist mit einem Biegeradius 8 um einen Biegewinkel 10 um die Hochachse 2a' gebogen. Bei dieser Biegung um die Hochachse 2a' bildet sich ein innerer Biegeradius 8a und ein äußerer Biegeradius 8b. In der Fig. 2 ist zu erkennen, dass der innere Biegeradius 8a erheblich kleiner ist als der äußere Biegeradius 8b.

Eine innere Seitenkante 12a spannt den inneren Biegeradius 8a auf und eine äußere Seitenkante 12b spannt den äußeren Beigeradius 8b auf. Naturgemäß ist die Länge des Kreisbogens am inneren Biegeradius 8a kürzer als die Länge des Kreisbogens am äußeren Biegeradius. Das bedeutet aber auch, dass das Material sowohl des Flachleiters 4 als auch der Isolation 6 im Bereich des inneren Biegeradius 8a gestaucht wird und im Bereich des äußeren Biegeradius 8b gedehnt wird. Problematisch ist insbesondere die Stauchung, die zu einer Werkstoffverhärtung und somit zu einer geringen Elastizität führt und gegebenenfalls sensibler gegenüber Temperaturschwankungen ist.

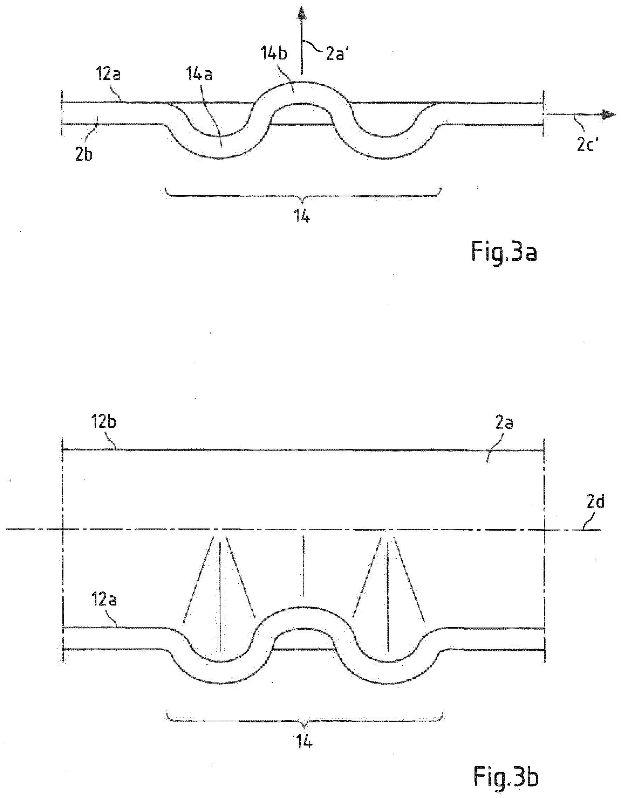

Um der unterschiedlichen Länge der Kreisbögen Rechnung zu tragen, wird vorgeschlagen, am inneren Biegeradius 8a im Bereich der inneren Seitenkante 12a den Energieleiter 2 um die Längsachse 2c umzuformen. Die Umformung führt zu einer Verformung der inneren Seitenkante 12a in Richtung der Hochachse 2a'. Eine entsprechend umgeformte innere Seitenkante 12a ist in der Fig. 3a dargestellt.

Die Fig. 3a zeigt eine Ansicht auf die schmale Oberfläche 2b. Zu erkennen ist, dass der Verlauf im Bereich einer Umformung 14 wellenförmig ist, wobei die innere Seitenkante 12a in Richtung der Hochachse 2a' umgeformt ist, wobei diese Umformung um die Längsachse 2c' erfolgt. Zu erkennen ist, dass die Umformung 14 aus Wellentälern 14a und Wellenbergen 14b gebildet ist, die einander folgen. Die Umformung 14 hat insbesondere intermittierende Wellentäler 14a und Wellenberge 14b, die antiparallel zueinander, parallel zur Hochachse 2a' ausgelenkt sind.

In der Fig. 3b ist eine perspektivische Ansicht der Umformung 14 dargestellt. Zu erkennen ist, dass ausgehend von der inneren Seitenkante 12a hin zur äußeren Seitenkante 12b die Umformung 14 geringer wird. Insbesondere ist die äußere Seitenkante 12b nicht umgeformt. Die Umformung 14 erstreckt sich insbesondere bis maximal zu einer Mittenachse 2d auf der breiten Oberfläche 2a. Durch den wellenförmigen Verlauf ist die Länge der inneren Seitenkante 12a in einem umgebogenen Zustand größer als die Länge der äußeren Seitenkante 12b. Dies dient zum Ausgleich der unterschiedlichen Längen der inneren Seitenkante 12a und der äußeren Seitenkante 12b im gebogenen Zustand, wie in Fig. 2 beschrieben.

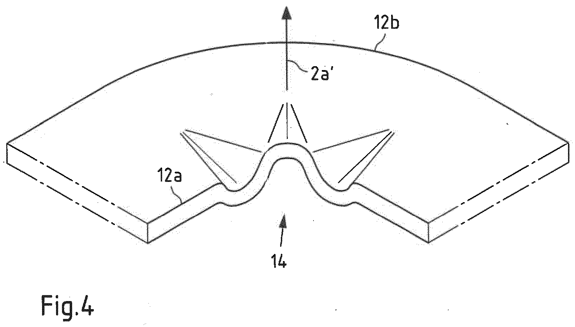

Durch die Umformung 14 ist, wie in Fig. 4b dargestellt, die innere Seitenkante 12a verlängert, so dass selbst bei einer Biegung um die Hochachse 2a' die Stauchung im Bereich der inneren Seitenkante 12a des Materials sowohl des Flachleiters 4 als auch des Isolationswerkstoffs 6 reduziert ist.

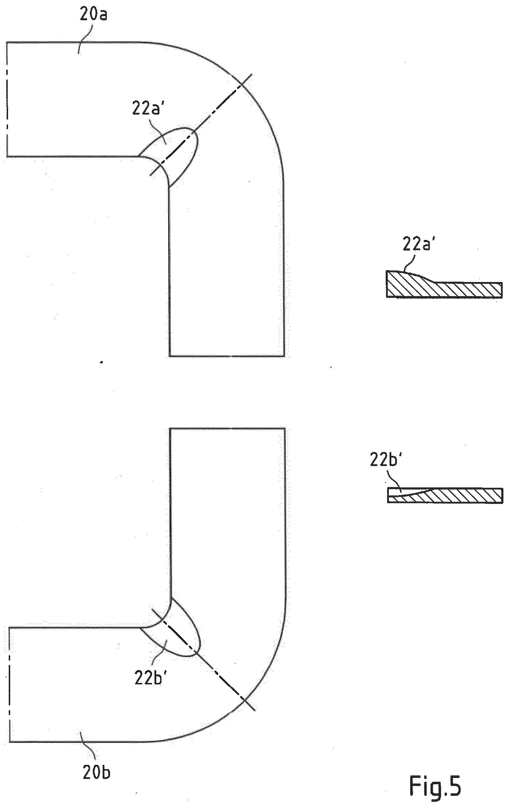

Die Umformung 14 kann in die Leitung 2 mit Hilfe von Klemmbacken eingebracht werden, wie sie in Fig. 5 dargestellt sind. In Fig. 5 sind auseinander geklappt zwei Klemmbacken 20a, 20b dargestellt, wobei die aneinander anliegenden Oberflächen gezeigt sind. Die erste Klemmbacke 20a kann im Bereich einer Biegung einen Vorsprung 22a' aufweisen. Zu erkennen ist dieser Vorsprung 22a' in dem rechts dargestellten Schnitt. Korrespondierend zu diesem Vorsprung 22a' kann die zweite Klemmbacke 20b einen Rücksprung 22b' aufweisen. Werden die beiden Oberflächen 20a, 20b aufeinander zu bewegt und liegt dazwischen die Leitung 2, so drückt der Vorsprung 22a' die Leitung 2 in Richtung der Hochachse 2a' und biegt diesen somit um dessen Längsachse 2c' und bringt die Umformung 14 ein.

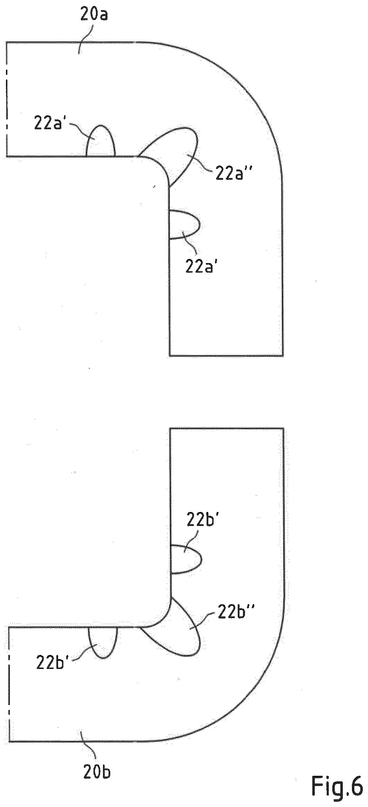

Fig. 6 zeigt zwei weitere Klemmbacken 20a, 20b, wobei an der ersten Klemmbacke 20a im Bereich der inneren Seitenkante drei Vorsprünge 22a', 22a" vorgesehen sind. Die beiden Vorsprünge 22a' rahmen den Vorsprung 22a" ein. Die Vorsprünge 22a' haben eine geringere Ausdehnung sowohl in Richtung der Querachse 2b' als auch in Richtung der Hochachse 2a'. Korrespondierend hierzu hat die zweite Klemmbacke 20b Rücksprünge 22b', 22b", die komplementär zu den Vorsprüngen 22a', 22a" sind.

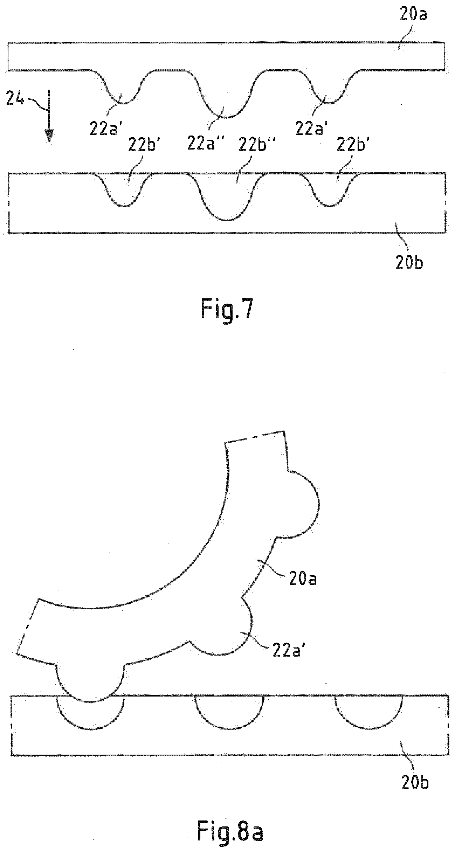

Fig. 7 zeigt die Vorsprünge 22a', 22a" und Rücksprünge 22b', 22b" in einer Seitenansicht. Zu erkennen ist, dass die Vorsprünge 22a', a" komplementär zu den Rücksprüngen 22b', b" sind. Die Klemmbacken 20a, 20b können relativ zueinander in Richtung 24 aufeinander zu bewegt werden und die Leitung 2 einklemmen. Bei diesem Verklemmen wird die Umformung 14 in die Leitung 2 eingebracht.

Wie in den Fig. 8a- c gezeigt, ist es auch möglich, dass die Klemmbacke 20a in einer rollenden Bewegung über die Klemmbacke 20b bewegt wird und somit während die Umformung 14 eingebracht wird, der Energieleiter 2 unmittelbar umgeformt wird, wie in der Fig. 4 gezeigt ist.

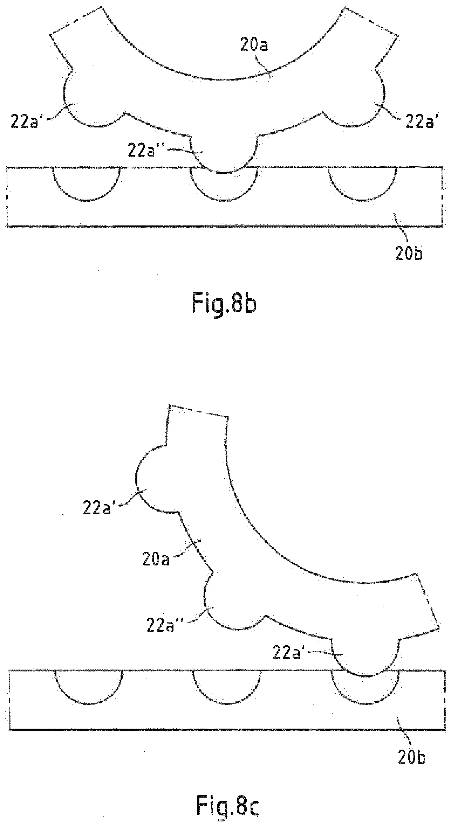

Dabei wird die Klemmbacke 20a in Längsrichtung der Leitung 2 ausgehend von einem ersten Vorsprung 22a', wie in Fig. 8a gezeigt, über einen Vorsprung 22a" hin zu einem Vorsprung 22a', wie in Fig. 8c gezeigt, über die Klemmbacke 20b bewegt, wobei dabei jeweils ein Vorsprung 22a', 22a" in Eingriff mit einem Rücksprung 22b', 22b" kommt.

Zu erkennen ist dieser Vorsprung 22a' in dem rechts dargestellten Schnitt. Korrespondierend zu diesem Vorsprung 22a' kann die zweite Klemmbacke 20b einen Rücksprung 22b' aufweisen. Werden die beiden Oberflächen 20a, 20b aufeinander zu bewegt und liegt dazwischen die Leitung 2, so drückt der Vorsprung 22a' die Leitung 2 in Richtung der Hochachse 2a' und biegt diesen somit um dessen Längsachse 2c' und bringt die Umformung 14 ein.

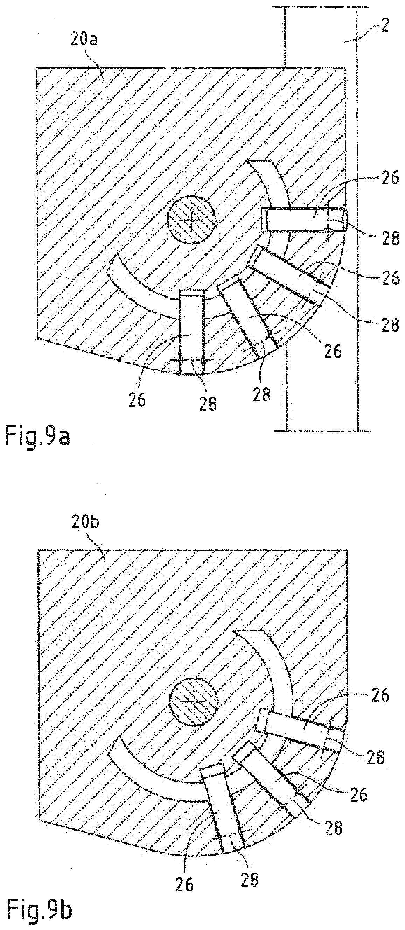

Die Umformung 14 kann in die Leitung 2 mit Hilfe von Klemmbacken eingebracht werden, wie sie in Fig. 9a, b dargestellt sind. In Fig. 9a, b sind auseinander geklappt zwei Klemmbacken 20a, 20b dargestellt, wobei die im zusammengebauten Zustand aneinander anliegenden Oberflächen gezeigt sind. Die erste und die zweite Klemmbacke 20a, b können jeweils im Bereich einer Stirnkante Stifte 26 aufweisen, die in Winkelabständen zueinander angeordnet sind. Die Stifte 26 sind senkrecht zur Zeichenebene schwenkbar an einer Achse 28 angelegt. Die Achse 28 liegt in einer Ebene parallel zur durch die Längsachse 2c' und die Querachse 2b' aufgespannten Ebene. In den Zwischenräumen der Stifte 26 der Klemmbacke 20a können an der Klemmbacke 20b entsprechend gelagerte Stifte 26 angeordnet sein. Ein Flachleiter 2 kann zwischen die Klemmbacken 20a, b und ein Gegenlager 30 eingespannt werden.

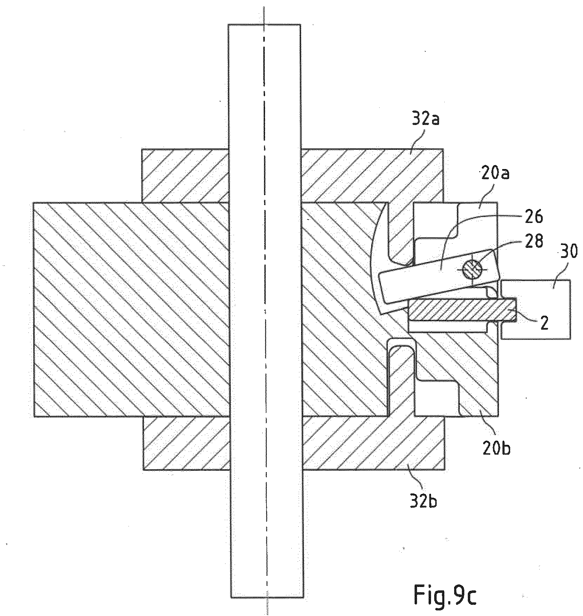

Fig. 9c zeigt eine Schnittansicht durch die Backen 20a, 20b. Wie zu erkennen ist, ist ein Stift 26 um eine Achse 28 schwenkbar gelagert. Der Stift 26 wird durch einen Antrieb 32a nach unten gedrückt. Für einen Stift 26 der unteren Klemmbacke 20b gilt gleiches mit einem Antrieb 32b. Die Antriebe 32a, b führen eine Pendelbewegung durch, so dass die Stifte nacheinander in Winkelabständen gegen den Flachleiter 2 gedrückt werden.

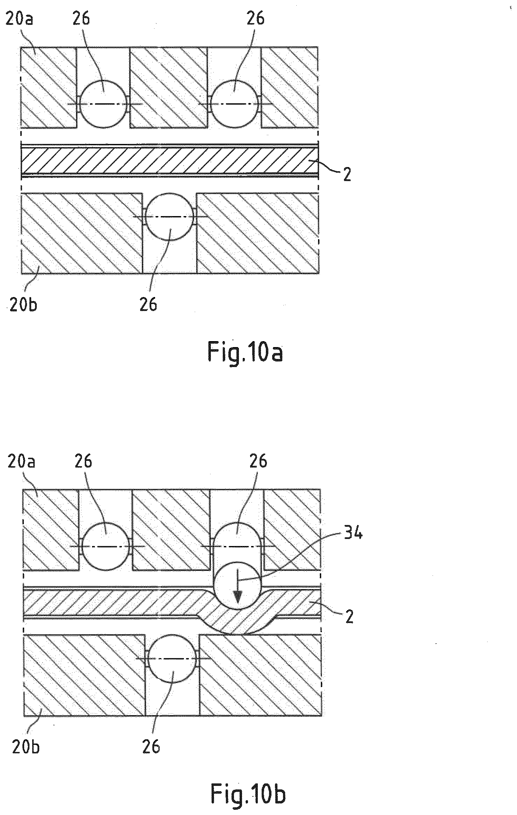

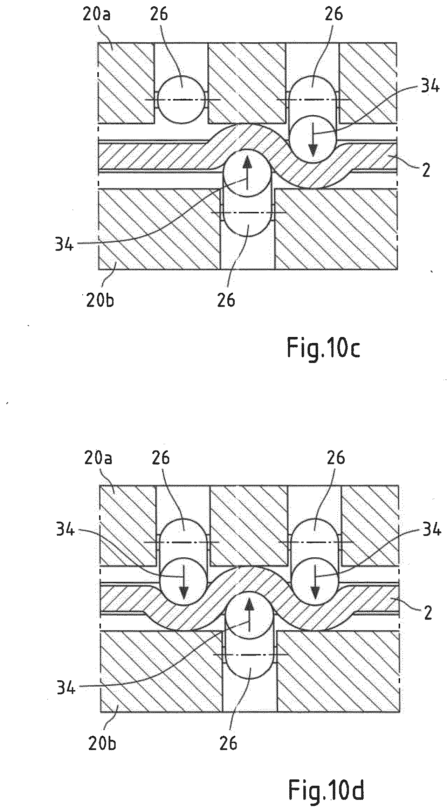

Die Figuren 10a-d zeigen die Stifte 26 in Aktion. Die Klemmbacken 20a,b werden aufeinander aufgesetzt. Eine Nut 32 zwischen den Klemmbacken ist zur Aufnahme des Flachleiters 2 gebildet. Der Flachleiter 2 wird mit einer schmalen Seitenkante 2b in die Nut 32 eingelegt und durch das Gegenlager 30 in der Nut 32 gehalten. Anschließend werden die Stifte 26 in Bewegungsrichtung 34 auf den Flachleiter 2 gedrückt. Dabei werden die Stifte 26, wie in der Abfolge der Figuren 10a-d zu erkennen ist, sukzessive nacheinander, in einer wellenförmigen Bewegung auf den Flachleiter 2 zu bewegt. Diese Bewegungsabfolge der Figuren 10a-d kann mehrfach nacheinander wiederholt werden, so dass der Flachleiter 2 umgeformt wird.

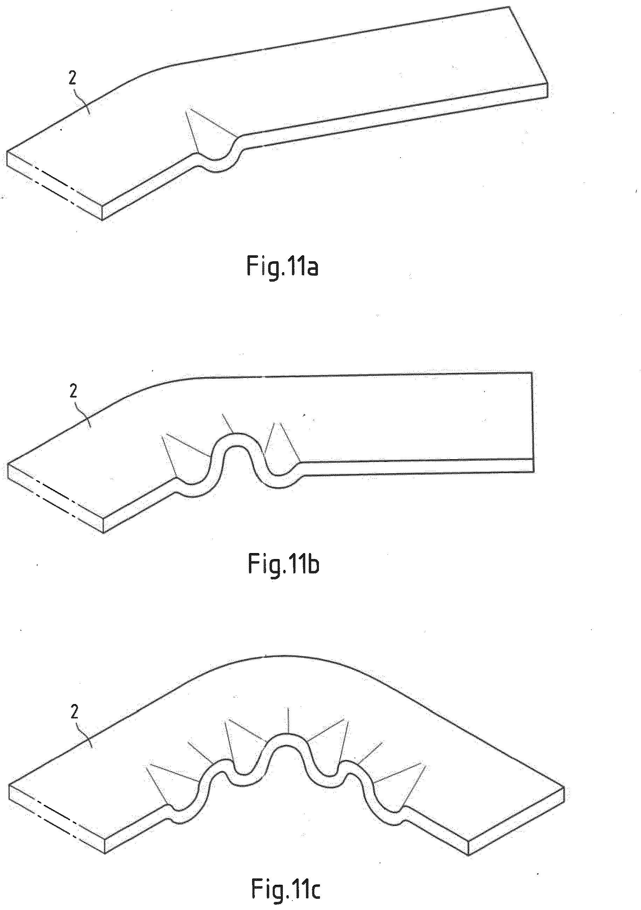

Die Leitung 2 in Fig. 11a entspricht der Leitung 2, wenn sie gemäß Figs. 8a umgebogen wurde. Die Leitung 2 in Fig. 11b entspricht der Leitung 2, wenn sie gemäß Fig. 8b umgebogen wurde. Die Leitung 2 in Fig. 11entspricht der Leitung 2, wenn sie gemäß Fig. 8c umgebogen wurde. Die Leitung 2 in Fig. 11c entspricht auch der Leitung 2, wenn sie gemäß Fig. 10a-d umgebogen wurde, insbesondere wenn die Stifte 26 einfach oder mehrfach pendelnd gegen den Leiter 2 gedrückt wurden.

Durch die beschriebene Anordnung ist es möglich, eine Leitung 2 zu biegen, ohne diesen um einen Dorn legen zu müssen. Die Stauchung des Materials des Isolationswerkstoffs 6 als auch des Flachleiters 4 ist im Bereich des inneren Biegeradius 8a durch die Verlängerung der inneren Seitenkante 12a reduziert.

### Bezugszeichenliste

- 2: Kraftfahrzeugenergieleitung
- 2a: breite Oberfläche
- 2b: schmale Oberfläche
- 2a': Hochachse
- 2b': Querachse
- 2c': Längsachse
- 4: Flachleiter
- 6: Isolationswerkstoff
- 8: Biegeradius
- 8a: inneren Biegeradius
- 8b: äußerer Biegeradius
- 10: Biegewinkel
- 12a: innere Seitenkante
- 12b: äußere Seitenkante
- 14: Umformung
- 20a,b: Klemmbacke
- 22a',a": Vorsprung
- 22b',b": Rücksprung
- 24: Bewegungsrichtung
- 26: Stift
- 28: Achse
- 32: Nut
- 34: Bewegungsrichtung

## Patentansprüche

1. Kraftfahrzeugenergieleitung (2) mit
- einem Flachleiter (4) mit einem zumindest viereckigen Profil,
- wobei sich der Flachleiter (4) entlang einer Längsachse (2c') erstreckt, wobei sich eine Hochachse (2a') entlang einer Flächennormalen einer breiten Oberfläche (2a) des Flachleiters (4) erstreckt und sich eine Querachse (2b') entlang einer Flächennormalen einer schmalen Oberfläche (2b) des Flachleiters (4) erstreckt und der Flachleiter (4) um die Hochachse (2a') gebogen ist und einen inneren Biegeradius (8a) und einen äußeren Biegeradius (8ab) aufweist, wobei
- der Flachleiter (4) im Bereich des inneren Biegeradius (8a) an seiner am inneren Biegeradius (8a) angeordneten inneren Seitenkante (12a) zumindest eine Umformung (14) um die Längsachse (2c') aufweist,
**dadurch gekennzeichnet,**
- **dass** die Umformung (14) vor der äußeren Seitenkante (12b) endet.

2. Kraftfahrzeugenergieleitung nach Anspruch 1,
**dadurch gekennzeichnet,**
- **dass** das Maß der Umformung (14) von der inneren Seitenkante (12a) hin zu einer an dem äußeren Biegeradius (8b) angeordneten äußeren Seitenkante (12b) abnimmt.

3. Kraftfahrzeugenergieleitung nach Anspruch 1 oder 2,
**dadurch gekennzeichnet,**
- **dass** sich die Umformung (14) entlang einer Achse senkrecht zur inneren Seitenkante (12a) erstreckt.

4. Kraftfahrzeugenergieleitung nach einem der vorangehenden Ansprüche,
**dadurch gekennzeichnet,**
- **dass** die Umformung (14) aus zumindest zwei zueinander gegenläufigen Biegungen um die Längsachse (2c') gebildet ist.

5. Kraftfahrzeugenergieleitung nach einem der vorangehenden Ansprüche,
**dadurch gekennzeichnet,**
- **dass** die Umformung (14) aus zueinander intermittierend gegenläufigen Biegungen um die Längsachse (2c') gebildet ist.

6. Kraftfahrzeugenergieleitung nach einem der vorangehenden Ansprüche,
**dadurch gekennzeichnet,**
- **dass** die Umformung (14) in einem Längsschnitt im Bereich der inneren Seitenkante (12a) wellenförmig ist.

7. Kraftfahrzeugenergieleitung nach einem der vorangehenden Ansprüche,
**dadurch gekennzeichnet,**
- **dass** der Flachleiter (4) metallisch ist, dass der Flachleiter (4) mit einem Isolationsmaterial isoliert ist und dass der Flachleiter (4) zusammen mit dem Isolationsmaterial umgeformt ist.

8. Verfahren zum Biegen einer Kraftfahrzeugenergieleitung (2) bei dem
- ein Flachleiter (4) mit einem zumindest viereckigen Profil bereitgestellt wird,
- wobei sich der Flachleiter (4) entlang einer Längsachse (2c') erstreckt, wobei sich eine Hochachse (2a') entlang einer Flächennormalen einer breiten Oberfläche (2a) des Flachleiters (4) erstreckt und sich eine Querachse (2b') entlang einer Flächennormalen einer schmalen Oberfläche (2b) des Flachleiters (4) erstreckt, und
- der Flachleiter (4) um die Hochachse (2a') gebogen wird, so dass der Flachleiter (4) einen inneren Biegeradius (8a) und einen äußeren Biegeradius (8ab) aufweist, wobei
- dass der Flachleiter (4) im Bereich des inneren Biegeradius (8a) an seiner am inneren Biegeradius (8a) angeordneten inneren Seitenkante (12a) um die Längsachse (2c') umgeformt wird,
**dadurch gekennzeichnet,**
- **dass** die Umformung (14) vor der äußeren Seitenkante (12b) endet.

9. Verfahren nach Anspruch 8,
**dadurch gekennzeichnet,**
- **dass** der Flachleiter (4) zunächst umgeformt wird und anschließend um die Hochachse (2a') gebogen wird.

10. Verfahren nach Anspruch 8 oder 9,
**dadurch gekennzeichnet,**
- **dass** der Flachleiter (2) mit seinen einander gegenüberliegenden breiten Oberflächen (2a) zwischen zwei Backen (20a, b) eines Biegewerkzeugs eingespannt wird,
- **dass** ein Spalt zwischen den Backen (20a, b) verkleinert wird und der Flachleiter (4) durch die Backen (20a, b) umgeformt wird, wobei die Backen (20a, b) ineinandergreifende Vor- und Rücksprünge aufweisen.

11. Verfahren nach einem der Ansprüche 8 bis 10,
**dadurch gekennzeichnet,**
- **dass** der Flachleiter (4) an seiner inneren Seitenkante (12a) um die Längsachse (2c') umgeformt wird und an seiner äußeren Seitenkante (12b) entlang der Längsachse nicht umgeformt wird.

12. Verfahren nach einem der Ansprüche 8 bis 11,
**dadurch gekennzeichnet,**
- **dass** der Flachleiter (4) gleichzeitig um die Hochachse (2a') gebogen und an seiner inneren Seitenkante (12a) um die Längsachse (2c') umgeformt wird.

## Claims

1. Motor vehicle power cable (2) with
- a flat conductor (4) having at least a rectangular profile,
- wherein the flat conductor (4) extends along a longitudinal axis (2c'), wherein a vertical axis (2a') extends along a surface normal of a wide surface (2a) of the flat conductor (4) and a transverse axis (2b') extends along a surface normal of a narrow surface (2b) of the flat conductor (4), and the flat conductor (4) is bent about the vertical axis (2a') and has an inner bending radius (8a) and an outer bending radius (8ab), wherein
- the flat conductor (4) has at least one forming (14) about the longitudinal axis (2c') in the region of the inner bending radius (8a) at its inner side edge (12a) located at the inner bending radius (8a),
**characterized in that**
- the forming (14) ends before the outer side edge (12b).

2. Motor vehicle power cable according to claim 1,
**characterized in that**
- the extent of the forming (14) decreases from the inner side edge (12a) toward an outer side edge (12b) located at the outer bending radius (8b).

3. Motor vehicle power cable according to claim 1 or 2,
**characterized in that**
- the forming (14) extends along an axis perpendicular to the inner side edge (12a).

4. Motor vehicle power cable according to one of the preceding claims,
**characterized in that**
- the forming (14) is formed from at least two bends about the longitudinal axis (2c') which run in opposite directions to one another.

5. Motor vehicle power cable according to one of the preceding claims,
**characterized in that**
- the forming (14) is formed from bends about the longitudinal axis (2c') which intermittently run in opposite directions to one another.

6. Motor vehicle power cable according to one of the preceding claims,
**characterized in that**
- the forming (14) is undulating in a longitudinal section in the region of the inner side edge (12a).

7. Motor vehicle power cable according to one of the preceding claims,
**characterized in that**
- the flat conductor (4) is metallic,
- the flat conductor (4) is insulated with an insulating material, and
- the flat conductor (4) is formed together with the insulating material.

8. Method for bending a motor vehicle power cable (2), in which
- a flat conductor (4) having at least a rectangular profile is provided,
- wherein the flat conductor (4) extends along a longitudinal axis (2c'), wherein a vertical axis (2a') extends along a surface normal of a wide surface (2a) of the flat conductor (4) and a transverse axis (2b') extends along a surface normal of a narrow surface (2b) of the flat conductor (4), and
- the flat conductor (4) is bent about the vertical axis (2a') so that the flat conductor (4) has an inner bending radius (8a) and an outer bending radius (8ab), wherein
- the flat conductor (4) is formed about the longitudinal axis (2c') in the region of the inner bending radius (8a) at its inner side edge (12a) located at the inner bending radius (8a),
**characterized in that**
- the forming (14) ends before the outer side edge (12b).

9. Method according to claim 8,
**characterized in that**
- the flat conductor (4) is first formed and then bent about the vertical axis (2a').

10. Method according to claim 8 or 9,
**characterized in that**
- the flat conductor (4) is clamped between two jaws (20a, 20b) of a bending tool with its opposite wide surfaces (2a),
- a gap between the jaws (20a, 20b) is reduced and the flat conductor (4) is formed by the jaws (20a, 20b), wherein the jaws (20a, 20b) have interlocking projections and recesses.

11. Method according to one of claims 8 to 10,
**characterized in that**
- the flat conductor (4) is formed at its inner side edge (12a) about the longitudinal axis (2c') and is not formed at its outer side edge (12b) along the longitudinal axis.

12. Method according to one of claims 8 to 11,
**characterized in that**
- the flat conductor (4) is simultaneously bent about the vertical axis (2a') and formed about the longitudinal axis (2c') at its inner side edge (12a).

## Revendications

1. Câble d'énergie pour véhicule automobile (2) avec
- un conducteur plat (4) avec un profil au moins rectangulaire,
- où le conducteur plat (4) s'étend le long d'un axe longitudinal (2c'), où un axe vertical (2a') s'étend le long d'une normale de surface d'une surface large (2a) du conducteur plat (4) et un axe transversal (2b') s'étend le long d'une normale de surface d'une surface étroite (2b) du conducteur plat (4) et le conducteur plat (4) est courbé autour de l'axe vertical (2a') et a un rayon de courbure intérieur (8a) et un rayon de courbure extérieur (8ab), où
- le conducteur plat (4) a, dans la zone du rayon de courbure intérieur (8a) au niveau de son bord latéral intérieur (12a) disposé au niveau du rayon de courbure intérieur (8a) au moins une déformation (14) autour de l'axe longitudinal (2c'),
**caractérisé en ce,**
- **que** la déformation (14) se termine avant le bord latéral extérieur (12b).

2. Câble d'énergie pour véhicule automobile selon la revendication 1,
**caractérisé en ce,**
- **que** la mesure de la déformation (14) diminue depuis le bord latéral intérieur (12a) en direction d'un bord latéral extérieur (12b) disposé au niveau du rayon de courbure extérieur (8b).

3. Câble d'énergie pour véhicule automobile selon la revendication 1 ou 2,
**caractérisé en ce,**
- **que** la déformation (14) s'étend le long d'un axe perpendiculaire au bord latéral intérieur (12a).

4. Câble d'énergie pour véhicule automobile selon l'une des revendications précédentes,
**caractérisé en ce,**
- **que** la déformation (14) est formée d'au moins deux courbures opposées autour de l'axe longitudinal (2c').

5. Câble d'énergie pour véhicule automobile selon l'une des revendications précédentes,
**caractérisé en ce,**
- **que** la déformation (14) est formée de courbures alternativement opposées autour de l'axe longitudinal (2c').

6. Câble d'énergie pour véhicule automobile selon l'une des revendications précédentes,
**caractérisé en ce,**
- **que** la déformation (14) est ondulée dans une coupe longitudinale dans la zone du bord latéral intérieur (12a).

7. Câble d'énergie pour véhicule automobile selon l'une des revendications précédentes,
**caractérisé en ce,**
- **que** le conducteur plat (4) est métallique, que le conducteur plat (4) est isolé avec un matériau isolant et que le conducteur plat (4) est déformé conjointement avec le matériau isolant.

8. Méthode pour plier un câble d'énergie pour véhicule automobile (2) dans laquelle
- un conducteur plat (4) est fourni avec un profil au moins rectangulaire,
- où le conducteur plat (4) s'étend le long d'un axe longitudinal (2c'), où un axe vertical (2a') s'étend le long d'une normale de surface d'une surface large (2a) du conducteur plat (4) et un axe transversal (2b') s'étend le long d'une normale de surface d'une surface étroite (2b) du conducteur plat (4), et
- le conducteur plat (4) est courbé autour de l'axe vertical (2a'), de sorte que le conducteur plat (4) a un rayon de courbure intérieur (8a) et un rayon de courbure extérieur (8ab), où
- le conducteur plat (4) est déformé dans la zone du rayon de courbure intérieur (8a) autour de l'axe longitudinal (2c') au niveau de son bord latéral intérieur (12a) disposé au niveau du rayon de courbure intérieur (8a),
**caractérisée en ce,**
- **que** la déformation (14) se termine avant le bord latéral extérieur (12b).

9. Méthode selon la revendication 8,
**caractérisée en ce,**
- **que** le conducteur plat (4) est déformé d'abord et ensuite courbé autour de l'axe vertical (2a').

10. Méthode selon la revendication 8 ou 9,
**caractérisée en ce,**
- **que** le conducteur plat (2) est serré avec ses surfaces larges opposées (2a) entre deux mors (20a, b) d'un outil de pliage,
- **qu'**un espace entre les mors (20a, b) est réduit et le conducteur plat (4) est déformé par les mors (20a, b), où les mors (20a, b) présentent des saillies et évidements en prise.

11. Méthode selon l'une des revendications 8 à 10,
**caractérisée en ce,**
- **que** le conducteur plat (4) est déformé au niveau de son bord latéral intérieur (12a) autour de l'axe longitudinal (2c') et le conducteur plat (4) n'est pas déformé au niveau de son bord latéral extérieur (12b) le long de l'axe longitudinal.

12. Méthode selon l'une des revendications 8 à 11,
**caractérisée en ce,**
- **que** le conducteur plat (4) est courbé simultanément autour de l'axe vertical (2a') et déformé au niveau de son bord latéral intérieur (12a) autour de l'axe longitudinal (2c').
